# EUROPEAN PATENT APPLICATION

(11) **EP 2 772 616 A1**
(43) Date of publication of application: **03.09.2014**
(21) Application number: 13157105.1
(22) Date of filing: 28.02.2013
(51) Int. Cl.: F01D 25/24, F02C 7/05, F02C 7/20

(54) **Power plant**

(71) Applicant: Alstom Technology Ltd, 5400 Baden (CH)
(72) Inventor: Engesser, Hermann, 5406 Baden-Ruetihof (CH)

(57) **Abstract**

A power plant (10) comprises a gas turbine (11), an air inlet system (20) with filtering means (22), a compressor (12), the entrance of which is connected with said air inlet system (20) by means of an air inlet duct (15), a combustor (13) and a turbine (14), whereby said gas turbine (11) is enclosed by a thermal block enclosure (16).

Reduced cost and an improved access during overhaul are achieved by arranging said air inlet system (20) on top of said thermal block enclosure (16), whereby said air inlet system (20) extends along said thermal block enclosure (16), and whereby said air inlet system (20) covers said thermal block enclosure (16).

Said air inlet system (20) is supported by a support structure (19), said support structure (19) is configured to enable a lateral movement (28) of said air inlet system (20) on said support structure (19), and said support structure (19) extends laterally beyond said thermal block enclosure (16) such that said air inlet system (20) can be moved on said support structure (19) between a first, operating position, where it covers said thermal block enclosure (16), and a second, overhaul position, where it completely uncovers said thermal block enclosure (16).

## Description

### BACKGROUND OF THE INVENTION

The present invention relates to the technology of stationary gas turbines. It refers to a power plant according to the preamble of claim 1.

### PRIOR ART

Gas turbines need inlet air, which is filtered, perhaps cooled or preheated, or humidified, then led to a compressor, where it is compressed to be used as pressurized combustion air in a combustor. The conditioning and conduction of the inlet air is done by an air inlet system, which is connected to the compressor entrance by means of an air inlet duct.

Document US 8,038,776 B2 discloses an inlet air filtration system for a gas turbine, which includes, in an exemplary embodiment, an air plenum, and a plurality of filter elements mounted inside the air plenum, with each filter element including a support structure. The inlet air filtration system also includes a plurality of electrodes positioned proximate the plurality of filter elements, where the electrodes are coupled to a power source which supplies a voltage to the electrodes. The voltage is sufficient to establish an electrostatic field between the electrodes and the filter elements, and is sufficient to produce a corona discharge from the electrodes.

Document US 8,303,678 B2 discloses an air intake filter system for a gas turbine. The air intake filter system comprises a housing connectable with a gas turbine for fluid communication with the gas turbine. A frame is located within the housing. A filter assembly comprises a flange connectible with the frame to mount the filter assembly. The flange has a portion contained in a first plane that is adapted to extend in a substantially vertical direction when mounted in the frame. A filter portion is attached to the flange for filtering air there through that is communicated to the gas turbine. The filter portion includes filter media capable of separating moisture from air flowing through the filter portion. A moisture resistant first end is attached to the flange and filter portion. The first end has a portion contained in a second plane that extends at an acute angle relative to the first plane. The first end is adapted to form a drain surface to direct moisture away from the interior of the filter assembly.

Document JP 2006057619 A wants to smooth an intake air flow passing through a filter layer in the most downstream side and enhance maintenance performance of the filter layer in the most downstream side and an adjacent filter layer in an upstream side, in a gas turbine filter intake unit comprising the plurality of the filter layers. The gas turbine intake filter unit is therefore constituted by arranging the filter layers at a plurality of stages divided into a plurality of unit filter regions in a surface region from the upstream side in the intake direction, inside an intake duct of the gas turbine. The filter layer in the most downstream side out of each of the filter layers has one projecting part toward the upstream side.

Document WO 03048544 A1 discloses a gas turbine unit as well as a method for operating a gas turbine with high-pressure turbine and a low-pressure turbine unit. A very quick and at the same time easily controllable augmentation or reduction of shaft power being produced by the gas turbine can be achieved by providing at least one liquid droplet injection device on the upstream side of compressor for injecting liquid into the stream of intake air in order to increase the shaft power generated by the gas turbine unit.

Document JP 10249123 wants to obtain large volume of treated gas without enlarging a chamber and to stably feed desired purified air to the gas turbine side or a generator. Before, behind and in the back surface of a central chamber of a box unit-like chamber, air intake openings are therefore formed, and the air intake opening of the back surface is provided with a flat plate-shaped member consisting of expanded metal or the like. Air that has entered the central chamber is divided in two as it is or by a partition plate and is fed to the side of a gas turbine filter chamber and the side of a generator filter chamber. The gas turbine filter chamber consists of prefilter, a medium-performance filter and a high-performance filter to feed highly purified air to the gas turbine side. The generator filter chamber consists of a prefilter and a medium-performance filter to feed purified air suitable for cooling a generator.

For all these prior art gas turbine systems the location of air inlet system and enclosure is causing reduced access and high costs based on the height of the air inlet system.

### SUMMARY OF THE INVENTION

It is an object of the present invention to provide a gas turbine power plant, which avoids the disadvantages of the known systems, can especially be realized with reduced costs, and provides access to filter elements from outside with limited work at height.

This and other objects are obtained by a power plant according to claim 1. The power plant according to the invention comprises a gas turbine, an air inlet system with filtering means, a compressor, the entrance of which is connected with said air inlet system by means of an air inlet duct, a combustor and a turbine, whereby said gas turbine is enclosed by a thermal block enclosure. It is characterized in that said air inlet system is arranged on top of said thermal block enclosure, said air inlet system extends along said thermal block enclosure, and said air inlet system covers said thermal block enclosure.

According to an embodiment of the invention said air inlet system is supported by a support structure, said support structure is configured to enable a lateral movement of said air inlet system on said support structure, and said support structure extends laterally beyond said thermal block enclosure such that said air inlet system can be moved on said support structure between a first, operating position, where it covers said thermal block enclosure, and a second, overhaul position, where it completely uncovers said thermal block enclosure.

Specifically, said gas turbine has a machine axis, and said support structure extends laterally beyond said thermal block enclosure in axial direction.

More specifically, said gas turbine drives a generator, which is coaxial with said gas turbine on the compressor side of said gas turbine, and said support structure extends laterally beyond said thermal block enclosure towards said generator.

According to another embodiment of the invention said air inlet system comprises in its upper part a filter section with a plurality of filter elements, said filter elements are arranged in said filter section side by side in horizontal direction, said filter elements stand upright such that they can be cleaned and/or replaced from above and from the outside, and said filter elements are covered and protected against environment by a weather hood.

Specifically, an air inlet cooling system is provided within said air inlet system just below and downstream of said filter section with its filter elements.

More specifically, the inlet air, which has passed the filter section with its filter elements and the air inlet cooling system, is laterally conducted within said air inlet system to a connection area, where said air inlet system is connected to said air inlet duct.

Even more specifically, a silencer is arranged in said connection area, which must be passed by said inlet air before entering said air inlet duct.

According to a further embodiment of the invention said air inlet system comprises an enclosure ventilation, which is arranged at the border of said thermal block enclosure in order to ventilate said thermal block enclosure.

### BRIEF DESCRIPTION OF THE DRAWINGS

The present invention is now to be explained more closely by means of different embodiments and with reference to the attached drawings.
- Fig. 1: shows a simplified scheme of a gas turbine power plant with a laterally moveable air inlet system according to an embodiment of the invention in its operating position;
- Fig. 2: shows the power plant of Fig. 1 with the air inlet system in its overhaul position; and
- Fig. 3: shows the power plant in a side view (Fig. 3A) and in a top view (Fig. 3B).

### DETAILED DESCRIPTION OF DIFFERENT EMBODIMENTS OF THE INVENTION

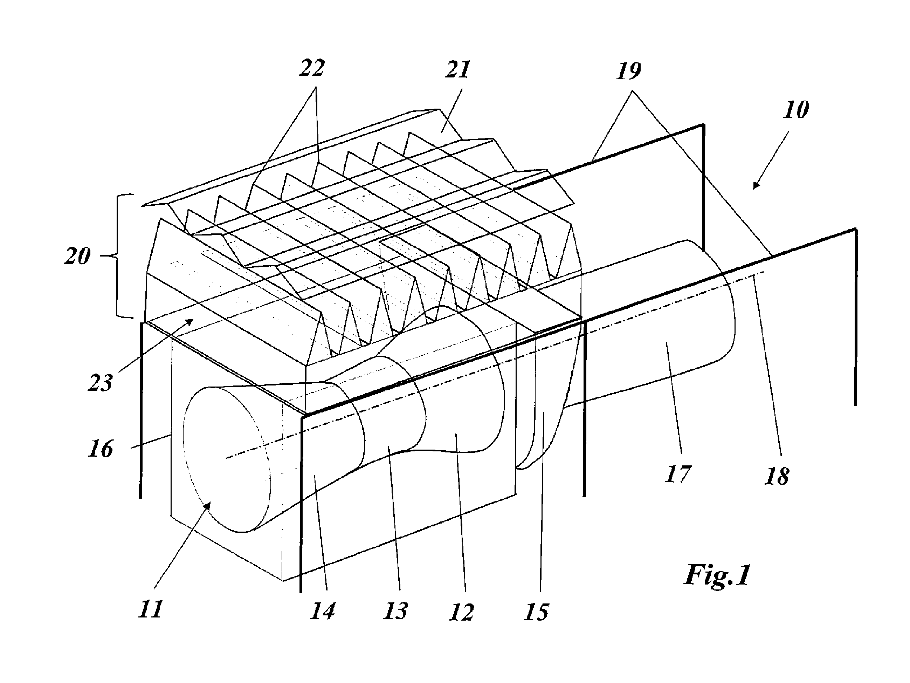

Fig. 1 shows a simplified scheme of a gas turbine power plant with a laterally moveable air inlet system according to an embodiment of the invention in its operating position. The power plant 10 of Fig. 1 comprises, arranged along a machine axis 18, a gas turbine 11, an air inlet system 20 with filtering means 22, and a generator 17, which is driven by said gas turbine 1. Gas turbine 11 comprises a compressor 12, the entrance of which is connected with said air inlet system 20 by means of an air inlet duct 15, a combustor 13 and a turbine 14. The gas turbine 11 is enclosed by a thermal block enclosure 16.

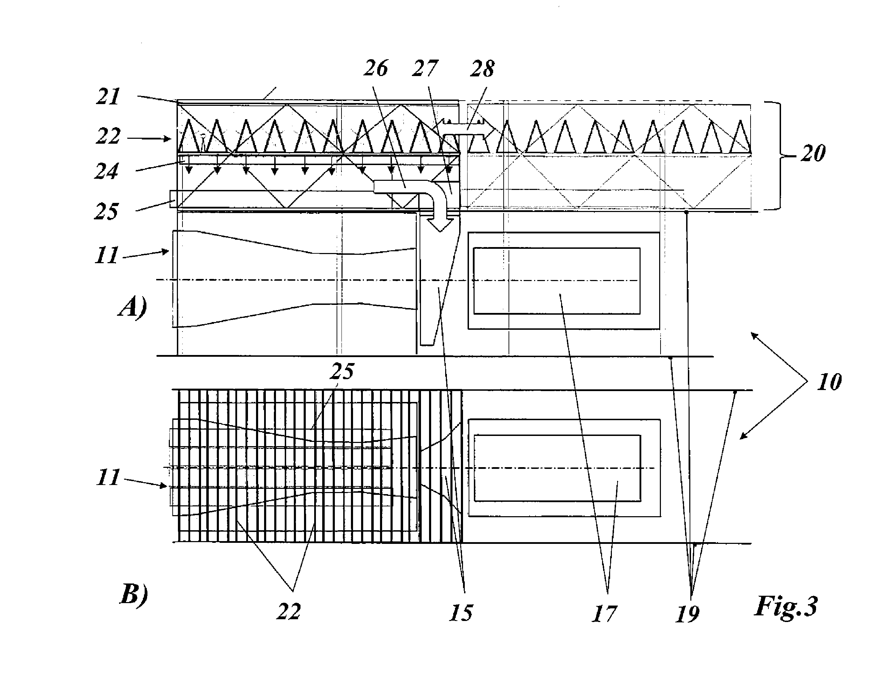

The idea of the present invention is to allocate the filtering means (filter elements 22) or air inlet filter (AIF) on top of the thermal block enclosure 16, thereby replacing the enclosure cover. The enclosure ventilation system (25 in Fig. 3) remains unchanged inside the air inlet system 20. The filter elements 22 are standing upright and can be cleaned/replaced from the outside. On top of the filter elements 22, a weather hood 21 shall protect the filter elements 22.

Thus, air inlet system 20 is arranged on top of thermal block enclosure 16, it extends along thermal block enclosure 16, and it covers thermal block enclosure 16. Besides the filter elements 22, air inlet system 20 comprises an air inlet subsystem 23, which may include - as shown in Fig. 3A - an air inlet cooling system 24, enclosure ventilation 25, and a silencer 27.

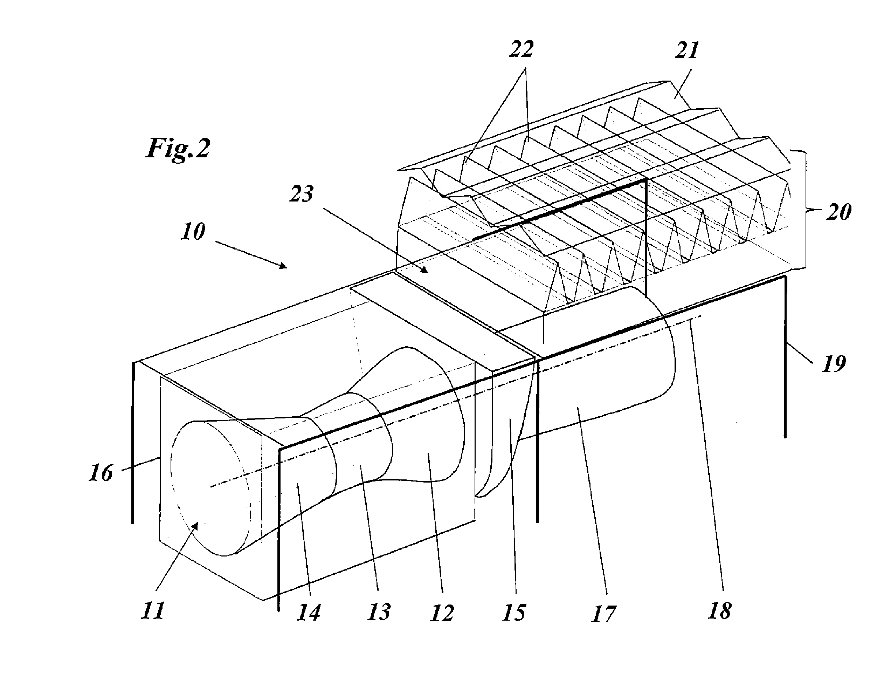

Preferably, the whole air inlet system 20 including air inlet subsystem 23 with its enclosure ventilation 25, can be moved on a suitable support structure 19. Support structure 19 extends laterally beyond said thermal block enclosure 16 such that air inlet system 20 can be moved on said support structure 19 along machine axis 18 between a first, operating position, where it covers thermal block enclosure 16 (Fig. 1), and a second, overhaul position, where it completely uncovers thermal block enclosure 16 (Fig. 2).

While the prior art location of air inlet system and enclosure is causing high costs based on the height of the air inlet system, the configuration according to the present invention allows optimal acoustic damping the air inlet duct, although generator 17 needs to be insulated.

When air inlet system 20 is in its position just above gas turbine 11 (left position in Fig. 3A), inlet air 26 coming from outside passes filter elements 22 in vertical direction downwards, flows to the right side of air inlet system 20, passes silencer 27 and then enters compressor 12 through air inlet duct 15.

When air inlet system 20 is moved in an overhaul movement 28 to its other position just above generator 17, there is free access to gas turbine 11 from above.

The advantages of the new configuration are:
- Reduced cost for noise insulation of the thermal block and air inlet system
- Reduced cost of air inlet filter in regards to height in combination with other thermal block enclosure
- No indoor arrangement for overhaul required, outdoor only. The auxiliary system might be covered in an enclosure
- No separate solutions for single-shaft and multi-shaft configurations
- Access to filter elements from outside
- Limited work at height
- During overhaul the whole air inlet system including enclosure ventilation system can be shifted over the generator
- Air inlet system is mounted below crane

However, due to the new configuration some peculiarities have to be considered:
- Insulation of air inlet duct versus generator should be provided
- Foreign object screen should be provided at the entrance of upstream flow guide of the air inlet system
- Air inlet silencers should be re-designed and optimized
- Personal access should be possible inside/outside air inlet system
- Air inlet cooling is possible but needs special design effort (a fogging system remains unchanged)
- Air inlet pressure drops remain unchanged

### LIST OF REFERENCE NUMERALS

- 10: power plant
- 11: gas turbine
- 12: compressor
- 13: combustor
- 14: turbine
- 15: air inlet duct
- 16: thermal block enclosure
- 17: generator
- 18: machine axis
- 19: support structure
- 20: air inlet system
- 21: weather hood
- 22: filter element
- 23: air inlet subsystem
- 24: air inlet cooling system
- 25: enclosure ventilation
- 26: inlet air
- 27: silencer
- 28: overhaul movement

## Claims

1. Power plant (10), comprising a gas turbine (11), an air inlet system (20) with filtering means (22), a compressor (12), the entrance of which is connected with said air inlet system (20) by means of an air inlet duct (15), a combustor (13) and a turbine (14), whereby said gas turbine (11) is enclosed by a thermal block enclosure (16), **characterized in that** said air inlet system (20) is arranged on top of said thermal block enclosure (16), said air inlet system (20) extends along said thermal block enclosure (16), and said air inlet system (20) covers said thermal block enclosure (16).

2. Power plant as claimed in claim 1, **characterized in that** said air inlet system (20) is supported by a support structure (19), said support structure (19) is configured to enable a lateral movement (28) of said air inlet system (20) on said support structure (19), and said support structure (19) extends laterally beyond said thermal block enclosure (16) such that said air inlet system (20) can be moved on said support structure (19) between a first, operating position, where it covers said thermal block enclosure (16), and a second, overhaul position, where it completely uncovers said thermal block enclosure (16).

3. Power plant as claimed in claim 2, **characterized in that** said gas turbine (11) has a machine axis (18), and said support structure (19) extends laterally beyond said thermal block enclosure (16) in axial direction.

4. Power plant as claimed in claim 3, **characterized in that** said gas turbine (11) drives a generator (17), which is coaxial with said gas turbine (11) on the compressor side of said gas turbine (11), and said support structure (19) extends laterally beyond said thermal block enclosure (16) towards said generator (17).

5. Power plant as claimed in claim 1, **characterized in that** said air inlet system (20) comprises in its upper part a filter section with a plurality of filter elements (22), said filter elements (22) are arranged in said filter section side by side in horizontal direction, said filter elements (22) stand upright such that they can be cleaned and/or replaced from above and from the outside, and said filter elements (22) are covered and protected against environment by a weather hood (21).

6. Power plant as claimed in claim 5, **characterized in that** an air inlet cooling system (24) is provided within said air inlet system (20) just below and downstream of said filter section with its filter elements (22).

7. Power plant as claimed in claim 6, **characterized in that** the inlet air (26), which has passed the filter section with its filter elements (22) and the air inlet cooling system (24), is laterally conducted within said air inlet system (20) to a connection area, where said air inlet system (20) is connected to said air inlet duct (15).

8. Power plant as claimed in claim 7, **characterized in that** a silencer (27) is arranged in said connection area, which must be passed by said inlet air (26) before entering said air inlet duct (15).

9. Power plant as claimed in claim 1, **characterized in that** said air inlet system (20) comprises an enclosure ventilation (25), which is arranged at the border of said thermal block enclosure (16) in order to ventilate said thermal block enclosure (16).
